# EUROPEAN PATENT SPECIFICATION

(11) **EP 0 674 089 B1**
(45) Date of publication and mention of the grant of the patent: **04.11.1998**
(21) Application number: 95301709.2
(22) Date of filing: 15.03.1995
(51) Int. Cl.: E06B 5/16

(54) **Improvements in or relating to fire doors**
Verbesserungen in Bezug auf Feuerschutztüren
Améliorations relatives aux portes coupe-feu

(30) Priority: 21.03.1994 GB 9405496
(43) Date of publication of application: 27.09.1995
(73) Proprietor: ENVIRONMENTAL SEALS LIMITED, Nr. Dover, Kent CT15 7JG (GB)
(72) Inventor: Ward, Derek Arthur, Maydensole, Dover, Kent CT15 5HR (GB)
(74) Representative: Fry, Alan Valentine

(56) References cited:
- DE-A- 2 166 616
- FR-A- 2 695 159
- GB-A- 1 288 613
- GB-A- 1 498 966
- US-A- 4 015 386
- US-A- 4 015 393
- US-A- 4 661 398

## Description

This invention relates to fire doors.

Internal timber framed fire doors are known in which the door interior is filled with layers of plasterboard or chipboard. Such doors provide only limited fire protection of, for example, up to half an hour, and rapidly become unstable in the presence of fire.

US-A-4015393 discloses a door having a fire resistant core and a frame which encompasses the core and is formed with rebates into which the core edges extend. The core is formed by pouring a hardenable plastic material having fire resistant properties into the void defined by the frame. The opposite faces of the core may be covered with veneers or thin plywood skins.

FR-A-2695159 discloses a door having a central core of, for example, phenolic foam or a ceramic material bordered by wooden panels. Flame retardant plates formed from a layer of hydrated sodium silicate and a quantity of an organic substance, eg glass fibres, are positioned between the core surfaces and the wooden panels.

The present invention sets out to provide a timber framed fire door capable of providing greatly increased fire protection and typically of the order of two to three hours.

According to the present invention in one aspect, there is provided a timber framed fire door which comprises a sheet of fire resistant mortar sandwiched between sheets or boards of thermally insulating fire resistant material, side edges of the sheet of fire resistant mortar being rebated into channels formed in the inwardly facing sides of the timber frame, the fire door being characterised in that the mortar comprises a mix of fire resistant calcium aluminate cement and inorganic fibres, the fibres being present in an amount representing up to 85% by weight of the mix, and in that the sheets or boards are coated with intumescent material.

In a further aspect the present invention provides a method of producing a fire door which includes the steps of forming rebate channels within the inwardly facing sides of a timber frame, locating a sheet or board within and to one side of the frame, pouring into the frame interior a quantity of fire resistant mortar completely to fill the frame interior and the side channels, and allowing the mortar to set, the method being characterised by the additional steps of locating within the rebated timber frame a thermally insulating sheet or board of fire resistant material onto which the fire resistant mortar is poured and placing on the exposed surface of the mortar either before or after setting of the mortar a further sheet or board of thermally insulating fire resistant material, and coating the external surfaces of the sheets or boards with intumescent material, the mortar comprising calcium aluminate cement mixed with inorganic fibres in an amount not exceeding 85% by weight of the mix.

The inorganic fibres are preferably ceramic fibres (eg alumina silicate fibres) or manmade mineral fibres such as rockwool fibres or glassfibres.

Inorganic fibres may be formulated together with a binder, for example a polymeric binder such as polyacrylate or a polyvinylacetate. The mortar may contain between 60% and 80% by weight of inorganic fibres. A mixture of inorganic fibre and binder can contain up to about 50% by weight by binder, and more particularly up to about 10% by weight of binder.

A typical composition of a suitable calcium aluminate cement, as determined by chemical analysis, is 38% to 40% Al₂O₃, 37% to 39% CaO, 3% to 5% SiO₂ and 15% to 18% Fe₂O₃/FeO. The cement may contain a mixture of noncalcium aluminates, dicalcium silicate and calcium aluminate.

An example of a calcium aluminate cement suitable for use in mortar used in fire doors in accordance with the present invention is "Ciment Fondu Lafarge" manufactured by the Lafarge Aluminous Cement Company Limited of Grays, Essex, United Kingdom.

The mortar may include an accelerator to accelerate the hardening of the mortar. In one embodiment the fire mortar composition may contain a mixture of accelerated and non-accelerated calcium aluminate cement. For example the accelerated calcium aluminate cement may be an accelerated form of Ciment Fondu Lafarge available from Lafarge Aluminous Cements of Grays, Essex, United Kingdom.

The thermally insulating fire resistant ceramic sheet may be formed from rockwool or similar manmade mineral fibres.

The intumescent material may be in sheet form or may take the form of an intumescent coating which is applied to the external faces of the thermally insulating fire resistant sheets or boards. The intumescent material may comprise an intumescent substance such as an alkaline metal silicate, eg a sodium silicate, or other intumescent substances such as exfoliating graphite. The intumescent material typically also contains a binding agent, most usually a polymeric binding substance such as a polyacrylate or derivative thereof, or a polyvinylacetate.

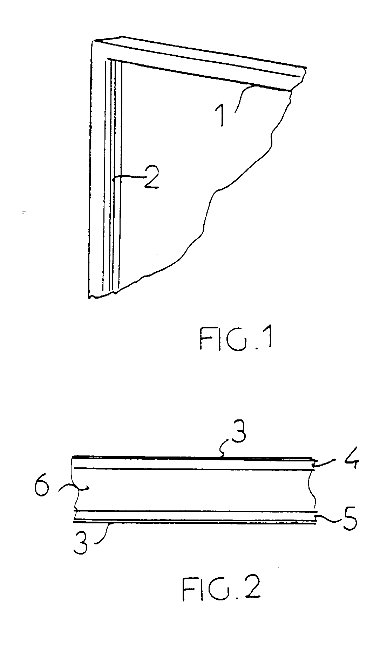

The invention will now be described by way of example only with reference to the accompanying diagrammatic drawings in which: -
Figure 1 is a partial perspective view of a timber frame of a fire door in accordance with the invention; and
Figure 2 is a cross section taken through a fire door in accordance with the invention.

The fire door illustrated comprises a hardwood frame 1 formed with an internal rebate 2. The interior of the door comprises outer sheets or coatings of intumescent material 3, sheets or boards (referred to hereinafter simply as "sheets") of thermally insulating heat resistant material, 4, 5 and an inner sheet or layer 6 of fire resistant mortar. The sheets 4, 5 are preferably ceramic sheets typically of 4mm thickness and the sheet or layer or mortar is typically of 20mm thickness. The sheets or coatings 3 may comprise sheets of intumescent paper or may comprise an intumescent wash or paint applied as a spray or by use of a brush. The sheet or layer of fire mortar 6 is firmly retained in place by its side edges which extend into the internal rebate 2 of the frame 1.

For assembly, the sheet 4 of thermally insulating heat resistant material is positioned within the hardwood frame and is dimensioned to define a close fit with the frame internal boundary. Fire resistant mortar is then poured as a fluid onto the exposed face of the ceramic sheet 4 and into the frame 1 completely to fill the rebate 2 and the frame interior. The sheet 5 of thermally insulating material is then placed onto the exposed surface of the mortar which is then allowed to set. Setting typically takes approximately three hours to complete. The intumescent material 3 may then be applied to the outer faces of the ceramic sheets 4, 5 either by an adhesive if in sheet form or as a coating.

Decorative panels may be secured to the coated exposed faces of the ceramic sheets 4,5 and, to complete the door, edging trim may be applied to the upright stile and head of the door. Typically the edging trim comprises a surface mounted strip of intumescent material from which protrudes a brush seal.

The fire resistant mortar comprises a mix of a calcium aluminate cement and an inorganic fibre material, preferably a ceramic fibre, eg an alumina silicate fibre, or a manmade mineral fibre such as rockwool fibre or glassfibre. The mortar contains up to about 85% by weight inorganic fibre material. The inorganic fibre may be formulated together with a binder, for example a polymeric binder such as polyacrylate or a polyvinylacetate. Typically the mortar contains between 60% and 80% by weight of the inorganic (eg ceramic) fibre. The mixture of inorganic fibre and binder can contain up to about 15% by weight of binder, more typically about 10% by weight of binder.

Typical formulations of calcium aluminate cement are set out in the introduction to this specification.

The thermally insulating fire resistant sheet or board material is typically a ceramic board of known type or a board formed from rockwool or similar manmade mineral fibres.

It will be appreciated that the fire door described above is merely exemplary of fire doors in accordance with the invention and that modifications can readily be made thereto without departing from the true scope of the invention as set out in the appended claims.

## Claims

1. A timber framed fire door which comprises a sheet of fire resistant mortar (6) sandwiched between sheets or boards (4,5) of thermally insulating fire resistant material, side edges of the sheet of fire resistant mortar being rebated into channels (2) formed in the inwardly facing sides of the timber frame, the fire door being characterised in that the mortar comprises a mix of fire resistant calcium aluminate cement and inorganic fibres, the fibres being present in an amount representing up to 85% by weight of the mix, and in that the sheets or boards are coated with intumescent material.

2. A fire door as claimed in Claim 1 characterised in that the inorganic fibres are ceramic or manmade fibres.

3. A fire door as claimed in Claim 1 characterised in that the inorganic fibres are alumina silicate fibres.

4. A fire door as claimed in Claim 1 characterised in that the inorganic fibres are rockwool fibres or glass fibres.

5. A fire door as claimed in any one of the preceding Claims characterised in that the intumescent material is an alkaline metal silicate.

6. A fire door as claimed in any one of Claims 1 to 4 characterised in that the intumescent material is exfoliating graphite.

7. A method of producing a fire door which includes the steps of forming rebate channels within the inwardly facing sides of a timber frame, locating a sheet or board within and to one side of the frame, pouring into the frame interior a quantity of fire resistant mortar completely to fill the frame interior and the side channels, and allowing the mortar to set, the method being characterised by the additional steps of locating within the rebated timber frame a thermally insulating sheet or board of fire resistant material onto which the fire resistant mortar is poured and placing on the exposed surface of the mortar either before or after setting of the mortar a further sheet or board of thermally insulating fire resistant material, and coating the external surfaces of the sheets or boards with intumescent material, the mortar comprising calcium aluminate cement mixed with inorganic fibres in an amount not exceeding 85% by weight of the mix.

## Patentansprüche

1. Holzgerahmte Feuerschutztür, die eine Schicht aus feuerfestem Mörtel (6) aufweist, die zwischen Schichten oder Platten (4, 5) aus thermisch isolierendem, feuerfesten Material aufgenommen ist, wobei die Seitenränder der Schicht aus feuerfestem Mörtel in Nuten auf gegenüberliegenden Innenseiten des Holzrahmens eingebettet sind und die Feuerschutztür dadurch gekennzeichnet ist, dass der Mörtel eine Mischung aus feuerfestem Kalziumaluminatzement und anorganischen Fasern ist, wobei die Fasern in einem Anteil bis zu 85 Gew.-% der Mischung vorliegen, und dass die Schichten oder Platten mit einem anschwellenden Material beschichtet sind.

2. Feuerschutztür nach Anspruch 1, dadurch gekennzeichnet, dass die organischen Fasern Keramik- oder Kunstfasern sind.

3. Feuerschutztür nach Anspruch 1, dadurch gekennzeichnet, dass die anorganischen Fasern Aluminiumsilikatfasern sind.

4. Feuerschutztür nach Anspruch 1, dadurch gekennzeichnet, dass die anorganischen Fasern Steinwollefasern oder Glasfasern sind.

5. Feuerschutztür nach einem der vorhergehenden Ansprüche, dadurch gekennzeichnet, dass das aufschäumende Material ein Alkalimetallsilikat ist.

6. Feuerschutztüre nach einem der Ansprüche 1 bis 4, dadurch gekennzeichnet, dass das auf schäumende Material aufblätternder Graphit ist.

7. Verfahren zum Herstellen einer Feuerschutztür, das die Schritte umfasst, Nuten in gegenüberliegenden Innenseiten eines Holzrahmens einzuformen, eine Schicht oder Platte darin auf einer Seite des Rahmens anzuordnen, in das Rahmeninnere eine Menge von feuerfestem Mörtel einzufüllen, um das Rahmeninnere und die seitliche Nuten vollständig zu füllen, wonach der Mörtel sich setzen darf, wobei das Verfahren durch die zusätzlichen Schritte gekennzeichnet ist, in dem gefalzten Holzrahmen eine thermisch isolierende Schicht oder eine Platte aus feuerfestem Material anzuordnen, auf die der feuerfeste Mörtel aufgegossen wird, und auf der freien Oberfläche des Mörtels, entweder bevor oder nach dem Setzen des Mörtels, eine weitere Schicht oder Platte aus thermisch isolierendem feuerfesten Material anzubringen und die äußeren Oberflächen der Schichten oder Platten mit einem anschwellenden Material zu beschichten, wobei der Mörtel Kaliumaluminatzement gemischt mit anorganischen Fasern in einer 85 Gew.-% der Mischung nicht übersteigenden Menge aufweist.

## Revendications

1. Porte coupe-feu à cadre en bois, qui comprend une plaque de mortier ignifuge (6) intercalée entre des plaques ou des panneaux (4, 5) constitués d'une matière ignifuge procurant une isolation thermique, les côtés latéraux de la plaque de mortier ignifuge étant munis de rainures en forme de canaux (2) pratiquées dans les côtés du cadre en bois orientés vers l'intérieur, la porte coupe-feu étant caractérisée en ce que le mortier comprend un mélange de ciment d'aluminate de calcium ignifuge et de fibres inorganiques, les fibres étant présentes en une quantité représentant jusqu'à 85% en poids du mélange, et en ce que les plaques ou les panneaux sont recouverts d'une matière intumescente.

2. Porte coupe-feu selon la revendication 1, caractérisée en ce que les fibres inorganiques sont des fibres céramiques ou synthétiques.

3. Porte coupe-feu selon la revendication 1, caractérisée en ce que les fibres inorganiques sont des fibres de silicate d'alumine.

4. Porte coupe-feu selon la revendication 1, caractérisée en ce que les fibres inorganiques sont des fibres de laine de roche ou des fibres de verre.

5. Porte coupe-feu selon l'une quelconque des revendications précédentes, caractérisée en ce que la matière intumescente est un silicate de métal alcalin.

6. Porte coupe-feu selon l'une quelconque des revendications 1 à 4, caractérisée en ce que la matière intumescente est du graphite qui s'exfolie.

7. Procédé de fabrication d'une porte coupe-feu, qui englobe les étapes consistant à former des rainures en forme de canaux dans les côtés orientés vers l'intérieur d'un cadre en bois, disposer une plaque ou un panneau dans et sur un côté du cadre, verser à l'intérieur du cadre une quantité de mortier ignifuge pour remplir complètement l'intérieur du cadre et les canaux latéraux, et laisser le mortier prendre, le procédé étant caractérisé par les étapes supplémentaires consistant à disposer dans le cadre en bois rainuré une plaque ou un panneau constitué d'une matière ignifuge procurant une isolation thermique, sur lequel on verse du mortier ignifuge, et placer, sur la surface exposée du mortier, soit avant, soit après la prise du mortier, une plaque ou un panneau supplémentaire constitué d'une matière ignifuge procurant une isolation thermique, et recouvrir les surfaces externes des plaques ou des panneaux avec une matière intumescente, le mortier comprenant du ciment d'aluminate de calcium mélangé avec des fibres inorganiques en une quantité qui ne dépasse pas 85% en poids du mélange.
